# EUROPEAN PATENT SPECIFICATION

(11) **EP 2 692 931 B1**
(45) Date of publication and mention of the grant of the patent: **22.05.2019**
(21) Application number: 13178371.4
(22) Date of filing: 29.07.2013
(51) Int. Cl.: D06F 37/20, F16F 7/09, D06F 37/22

(54) **Laundry processing machine**
Wäschebehandlungsmaschine
Machine de traitement de linge

(30) Priority: 30.07.2012 KR 20120083383; 30.07.2012 KR 20120083384
(43) Date of publication of application: 05.02.2014
(60) Divisional application: 19169187.2
(73) Proprietor: LG Electronics Inc., Seoul 150-721 (KR)
(72) Inventor: Kim, Keunjoo, 153-023 Seoul (KR); Park, Seungchul, 153-023 Seoul (KR)
(74) Representative: Vossius & Partner Patentanwälte Rechtsanwälte mbB

(56) References cited:
- EP-A1- 0 555 707
- EP-A1- 2 090 687
- US-A1- 2006 011 429
- US-A1- 2011 113 832

## Description

The present invention relates to a laundry processing machine.

A laundry processing machine includes an outer tub arranged in and supported by a fixing body such as a casing or a body, and an inner tub arranged in the outer tub to accommodate laundry and rotate. The laundry processing machine performs the operations of washing, rinsing and drying.

The laundry processing machine is generally provided with a suspension to attenuate vibration of the outer tub caused by rotation of the inner tub. The suspension functions to absorb vibrational energy to damp vibration. However, the conventional suspension simply absorbs vibrational energy, but fails to differently respond according to different characteristics of vibration. For example, during operation of the laundry processing machine, when rotation of the inner tub in a transient state before reaching a steady state, larger vibration occurs than in the steady state. Accordingly, a means to produce shock absorption force or vibration damping force is needed in this state. On the other hand, in the steady state, it is preferable to allow the outer tub to naturally vibrate to maintain the steady state rather than to change the stabilized vibration system.

However, conventionally, a suspension has been designed merely in view of how to attenuate vibration in a vibration section in which the outer tub severely vibrates, e.g., the transient vibration section, but not in consideration of vibration in the steady state. Particularly, with the conventional suspension, most of the vibration of the outer tub in the steady state is transferred to surrounding constituents such as the cabinet. As a result, the floor on which the laundry processing machine is installed vibrates and excessive noise is produced due to vibration of the laundry processing machine.

EP 0 555 707 A1 discloses a friction damper which comprises motor, spindle, screw nut member, leaf spring, brake lining, and housing. For damping of oscillations during starting and stopping of the drum during the spin process of the washing machine, the spindle of the motor is rotated so that the spindle nut being in engagement therewith is shifted to the right in the direction of the double arrow P shown in Fig. 1 of EP 0 555 707 A1. Thereby it meets with its conical portion or the conical surface with the bending points of the leaf springs. They are resiliently spread apart thereby, whereby the brake shoes are pressed outwards. They are thus pressed their brake linings against the inner wall of the housing. In this way vibrations transferred from the washing machine drum through the eye to the case will be properly damped.

Therefore, the present invention has been made in view of the above problems, and it is an object of the present invention to provide a laundry processing machine which is capable of actively controlling damping force in response to the amount of vibration of the outer tub.

In accordance with an aspect of the present invention, the above and other objects can be accomplished by the provision of a laundry processing machine according to claim 1.

The slide member guide may move together with the cylinder according to the vibration of the outer tub.

A maximum allowable displacement of the slide member guide with respect to the slide member may increase when the slide member guide rotates from the first rotational position to the second rotational position.

The slide member may comprise a protrusion protruding from an outer circumferential surface of the slide member, the slide member guide comprises an open-cut portion extending along a circumferential direction of the slide member guide to allow the protrusion to be disposed through the open-cut portion, and the open-cut portion comprises first and second boundaries formed at both sides of the protrusion such that the first boundary moves the protrusion in one direction and the second boundary moves the protrusion in an opposite direction according the vibration of the outer tub. A distance between the first boundary and the second boundary may vary along a circumferential direction.

A relative displacement of the slide member guide with respect to the protrusion may be restricted by the distance between the first boundary and the second boundary.

The protrusion may be restricted between the first boundary and the second boundary when the slide member guide is at the first rotational position.

The shock absorber may further comprise a shock absorption control motor to provide driving force, wherein the slide member guide is rotated by the shock absorption control motor.

The above and other objects, features and other advantages of the present invention will be more clearly understood from the following detailed description taken in conjunction with the accompanying drawings, in which:
FIG. 1 is a cross-sectional view showing a laundry processing machine according to an exemplary embodiment of the present invention;
FIG. 2 is a perspective view showing a shock absorber shown in FIG. 1;
FIG. 3 is a cutaway view showing the inner part of the shock absorber of FIG. 2;
FIG. 4 is an enlarged view showing a portion of the shock absorber of FIG. 2;
FIG. 5A is a perspective view showing a slide member guide;
FIG. 5B is a front view showing the slide member guide of FIG. 5A;
FIG. 6 is a front view showing a slide member;
FIG. 7 is a cutaway view showing the shock absorber, with the slide member guide placed at a first rotational position;
FIG. 8 is a cutaway view showing the shock absorber, with the slide member guide placed at a second rotational position;
FIG. 9 is a block diagram illustrating control relationship between constituents that operate a shock absorber according to one embodiment;
FIG. 10 is a cutaway view showing a cylinder;
FIG. 11 is a view showing another embodiment of the slide member;

Reference will now be made in detail to the preferred embodiments of the present invention, examples of which are illustrated in the accompanying drawings. Wherever possible, the same reference numbers will be used throughout the drawings to refer to the same or like parts.

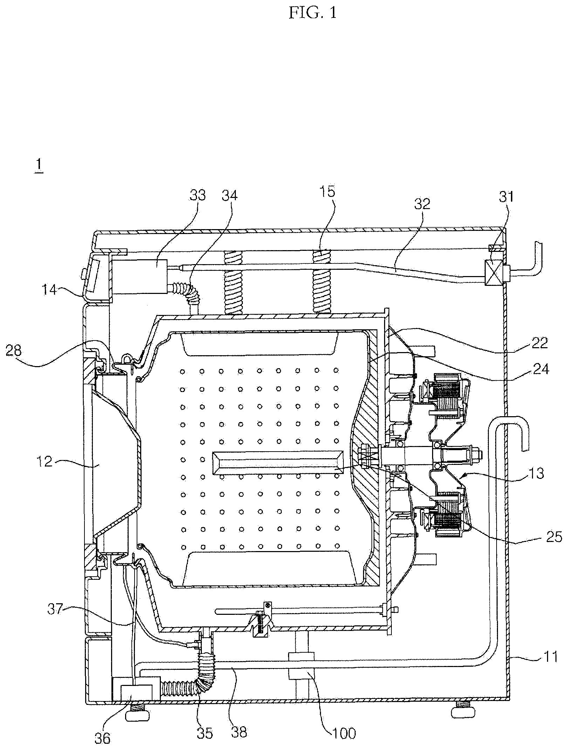

FIG. 1 is a cross-sectional view showing a laundry processing machine according to an exemplary embodiment of the present invention. Referring to FIG. 1, the laundry processing machine 1 includes a casing 11 forming an external appearance of the laundry processing machine and provided with a laundry entrance hole allowing insertion or retrieval of laundry, a door 12 rotatably installed at the casing 11 to open and close the laundry entrance hole, an outer tub 22 disposed in the casing 11, an inner tub 24 rotatably arranged in the outer tub 22 to accommodate laundry therein, a driving unit 13 to provide driving force for rotation of the inner tub 24, a detergent box (not shown) to accommodate detergent to be introduced into the outer tub 22, and a control panel 14 provided with input keys to receive various input control commands from a user and a display to display the operation state of the laundry processing machine.

The outer tub 22 is supported by a shock absorber in the casing 11. The shock absorber is a device to absorb vibrational energy. Examples of the shock absorber include a spring which is elastically deformed according to vibration of a vibrating body and returned to original state when external force is removed, and a damper which produces a predetermined resistance or damping force against periodic vibration of a vibrating body to hasten disappearance of the periodic vibration. Particularly, the shock absorber can actively provide damping force in response to vibration of the outer tub 22.

In the laundry processing machine 1 of this embodiment, shock may be absorbed not only by the shock absorber 100, but also by the spring 15. The spring 15 is deformable according to displacement of the upper end of the outer tub 22. In a broad sense, the spring 15 is a type of shock absorber. However, the term 'spring' is employed to distinguish the spring 15 from the shock absorber 100.

The inner tub 24 is rotated by the driving unit 13. The inner tub 24 is provided with a plurality of through holes to allow washing water to flow between the inner tub 24 and the outer tub 22. The inner wall of the inner tub 24 may be provided with a lifter 25 to lift the laundry to a certain height when the inner tub 24 rotates.

The inner tub 24 may be driven in an indirect driving manner of transferring driving force produced by the driving unit 13 to the inner tub 24 via a power transmission means such as a belt or a pulley. In this embodiment, however, a direct driving manner is adopted in which the driving shaft of the driving unit 13 is coaxially aligned with the center of rotation of the inner tub 24, and a rotor of the driving unit 13 and the inner tub 24 integrally rotate. Particularly, in the direct driving manner, the driving unit 13 may include a motor capable of controlling the rotational speed of the inner tub 24 as well as rotating the inner tub 24 in the forward/rearward directions.

The gasket 28 seals the gap between the outer tub 22 and the casing 11. The gasket 28 is disposed between an opening at the front the outer tub 22 and the laundry entrance hole of the casing 11. The gasket 28 is formed of an elastically deformable material. The gasket 28 relieves shock transferred to the door 12 by being folded during rotation of the inner tub 24 and at the same time prevents the washing water in the outer tub 22 from leaking outward. The gasket 28 may be provided with a nozzle (not shown) to spray washing water into the inner tub 24.

In addition, the laundry processing machine 1 may include a water supply valve 31 to regulate inflow of washing water from an external water source, and a water supply channel 32 through which washing water introduced via the water supply valve 31 flows.

The detergent box accommodates an additive for washing such as a detergent for washing, a fabric softener, or a bleaching agent. The detergent box may be arranged at the front of the casing 11 so as to be retractable from the casing 11. A housing 33 to accommodate the detergent box may be provided in the casing 11. The washing water supplied through the water supply channel 32 is mixed with the detergent while passing through the detergent box in the detergent box the housing 33 and supplied into the outer tub 22 via a water supply bellows 34.

The laundry processing machine 1 may further include a drainage bellows 35 to discharge washing water from the outer tub 22, a pump 36 to forcibly transport the washing water along the drainage bellows 35, and a drainage channel 38 to guide discharge of the washing water forcibly transported by the pump 36 to the outside. Depending on embodiments, the washing water in the outer tub 22 may be forcibly transported to the nozzle by operation of the pump 36. In this case, a circulation channel 37 may be provided to connect the pump 36 to the nozzle.

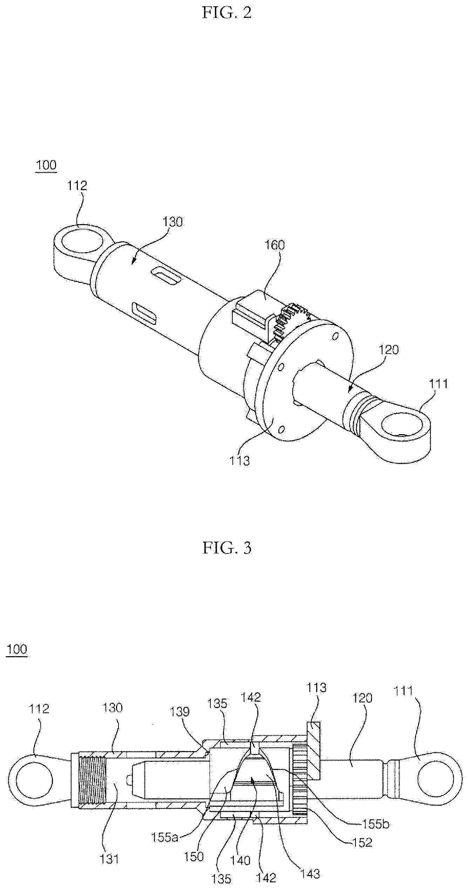

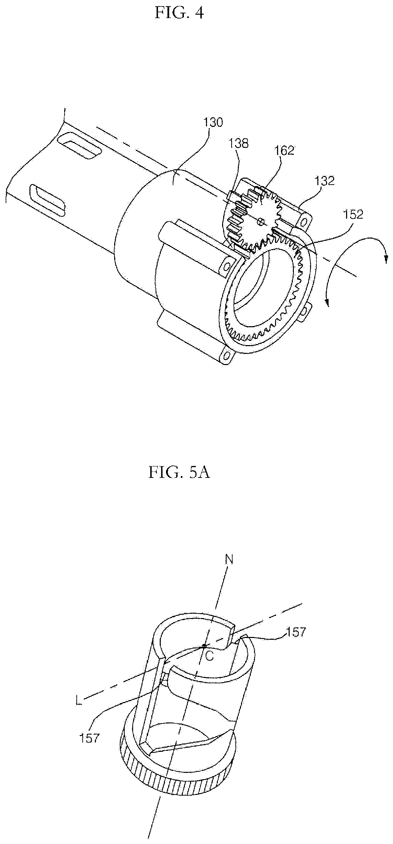

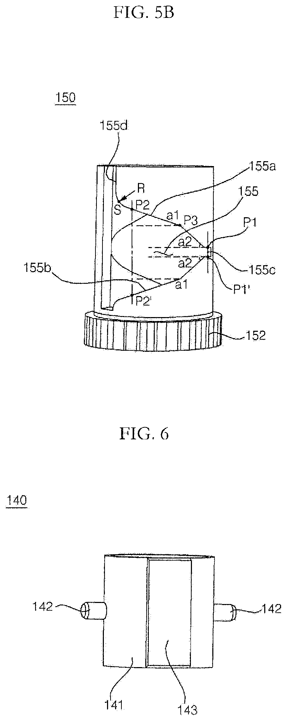

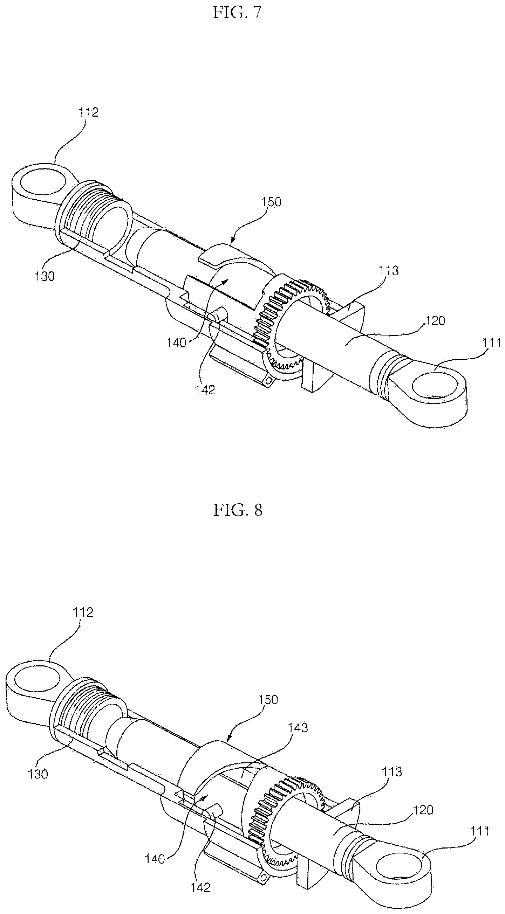

FIG. 2 is a perspective view showing a shock absorber shown in FIG. 1. FIG. 3 is a cutaway view showing the inner part of the shock absorber of FIG. 2. FIG. 4 is an enlarged view showing a portion of the shock absorber of FIG. 2. FIG. 5A is a perspective view showing a slide member guide. FIG. 5B is a front view showing the slide member guide of FIG. 5A. FIG. 6 is a front view showing a slide member. FIG. 7 is a cutaway view showing the shock absorber, with the slide member guide placed at a first rotational position. FIG. 8 is a cutaway view showing the shock absorber, with the slide member guide placed at a second rotational position.

Referring to FIGS. 2 to 8, the shock absorber 100 includes a piston 120, a cylinder 130, a slide member 140, and a slide member guide 150.

The piston 120 is connected to one of the casing 11 and the outer tub 22 and is inserted into the cylinder 130. The cylinder 130 is connected to the other one of the casing 11 and the outer tub 22. When the outer tub 22 vibrates, the piston 120 and the cylinder 130 make relative movements with respect to each other. That is, when the outer tub 22 vibrates, the piston 120 and the cylinder 130 have displacements with respect to each other. In this embodiment, the cylinder 130 is connected to the outer tub 22 and is moved according to vibration of the outer tub 22. On the other hand, the piston 120 is connected to the casing 11 and fixed. The shock absorber 100 may be provided with a piston connection portion 111 to connect the piston 120 to the casing 11, and a cylinder connection portion 112 to connect the cylinder 130 to the outer tub 22.

The shock absorber 100 may further include a shock absorption control motor 173. The shock absorption control motor 173 provides driving force to rotate the slide member guide 150, which will be described later. For example, The shock absorption control motor 173 may include a direct current (DC) motor which produces torque between about 300 g·cm and 2,500 g·cm. Driving force from the shock absorption control motor 173 may be transferred to the slide member guide 150 by at least one driving gear 162, which will be described later. A driven gear 152 to engage with a driving gear 162 may be formed at the slide member guide 150. In this embodiment, the driven gear 152 is a spur gear having a plurality of gear teeth arranged along the outer circumferential surface of the slide member guide 150 in a circumferential. Embodiments of the present invention are not limited thereto. The driven gear 152 may be realized in various shapes so long as it can receive power from the driving gear 162.

The slide member guide 150 is interposed between the cylinder 130 and the slide member 140, is driven by the shock absorption control motor 173 to rotate between the first rotational position (see FIG. 7) and the second rotational position (see FIG. 8). When the slide member guide 150 moves according to vibration of the outer tub 22, the slide member guide 150 has a larger displacement at the second rotational position with respect to the slide member 140 than at the first rotational position. Herein, the displacement is defined with reference to the relative position of the slide member guide 150 with respect to the slide member 140. The slide member guide 150 may be formed of polytetrafluoroethylene.

The slide member 140 is formed to have a hollow shape to allow the piston 120 to be inserted thereinto. Thereby, friction occurs between the inner circumferential surface of the slide member 140 forming the hollow part and the outer circumferential surface of the piston 120.

The slide member 140 may include a protrusion 142 protruding from the outer circumferential surface 141 of the slide member 140 (see FIG. 6). A pair of protrusions 142 may be provided at the opposite positions. A movement groove 135 may be formed inside the cylinder 130. The protrusions 142 move, thereby being inserted into the movement groove 135. The movement groove 135 extends in the longitudinal direction of the cylinder 130 to allow the protrusions 142 to move within a certain range when the slide member 140 moves in response to vibration of the outer tub 22. A pair of movement grooves 135 may be provided on both sides of cylinder 130 to correspond to the number of the protrusions 142.

The movement groove 135 may be formed to have a width corresponding to that of the protrusion 142. In this case, the protrusions 142 are allowed to move in the longitudinal direction of the movement groove 135 within a certain range, but circumferential movement of the protrusions 142, i.e., rotational movement of the slide member 140 about the piston 120 is restricted.

Referring to FIGS. 5A and 5B, the slide member guide 150 includes an open-cut portion 155 formed to surround the outer side of the slide member 140 and to be cut open to allow the protrusions 142 to be disposed therethrough. Accordingly, movement of the protrusions 142 according to movement of the slide member 140 mainly occurs in a space limited by the open-cut portion 155.

The open-cut portion 155 extends in the circumferential direction of the slide member guide 150. The open-cut portion 155 includes a first boundary 155a and a second boundary 155b arranged on both sides of the protrusion 142. The first boundary 155a moves the protrusion 142 in one direction (e.g., downward) according to vibration of the outer tub 22, and the second boundary 155b moves the protrusion 142 in the opposite direction (e.g., upward). The distance between the first boundary 155a and the second boundary 155b may vary along the circumferential direction. In the case that the amount of vibration of the outer tub 22 is small, the displacement of the slide member guide 150 is also small. Therefore, collision between the protrusion 142 and the first boundary 155a or second boundary 155b may not occur. In this case, only the slide member guide 150 needs to move, with the slide member 140 fixed. To this end, the friction between the slide member guide 150 and the slide member 140 is preferably smaller than the friction between the slide member 140 and the piston 120.

Meanwhile, the slide member 140 is moved by the slide member guide 150 which moves together with the cylinder 130 according to vibration of the outer tub 22. Depending on the distance between the first boundary 155a and the second boundary 155b contacting the protrusion 142 at each rotational position, the maximum allowed value of relative displacement of the slide member guide 150 with respect to the protrusion 142 is determined.

Hereinafter, the relative displacement of the protrusion 142 is defined with reference to the relative position of the protrusion 142 (or the slide member 140) with respect to the slide member guide 150 when a relative displacement is produced between the slide member 140 and the slide member guide 150 according to vibration of the outer tub 22. According to this definition, the relative displacement of the protrusion 142 allowed at the second rotational position is greater than the relative displacement allowed at the first rotational position. In the case that the protrusion 142 is restricted by the slide member guide 150 at the first rotational position, the relative displacement of the slide member guide 150 with respect to the protrusion 142 is 0.

When the slide member guide 150 reciprocates according to vibration of the outer tub 22, the distance between the point P2 at which the protrusion 142 and the first boundary 155a meet at the second rotational position and the point P2' at which the protrusion 142 and the second boundary 155b meet at the second rotational position is greater than the distance between the point P1 at which the protrusion 142 and the first boundary 155a meet at the first rotational position and the point P1' at which the protrusion 142 and the second boundary 155b meet at the first rotational position. In this embodiment, movement of the protrusion 142 is restricted by a restriction groove 155c at the first rotational position. The first rotational position is not limited thereto. the first rotational position and the second rotational position are defined as a relative relationship between the first rotational position and the second rotational position throughout this specification. Accordingly, any rotational position can be taken as the first rotational position so long as the maximum allowable relative displacement of the slide member guide 150 with respect to the slide member 140 is smaller than the maximum allowable relative displacement at the second rotational position. The maximum allowable relative displacement substantially includes the value of 0.

The open-cut portion 155 may be provided with a protrusion insert path 157 to allow the protrusion 142 to be inserted into or removed from the protrusion insert path 157 when the slide member 140 and the slide member guide 150 are coupled or decoupled. Both sides of the protrusion insert path 157 is spaced a predetermined distance from each other to allow the protrusion 142 to be inserted thereinto. One of the both sides, i.e., the insert path boundary 155d extends from the first boundary 155a.

Meanwhile, the first boundary 155a or the second boundary 155b may include adjoining sections having different slopes. The sections extending from the protrusion insert path 157 to the restriction groove 155c along the first boundary 155a may include a transition point P3 therebetween at which the slope of a tangent line changes. The slope may change from a first slope a1 to the second slope a2 at the transition point P3 (a1<a2). When the protrusion 142 is displaced from the restriction groove 155c, if the rotational position changes from the first rotational position to the second rotational position, the protrusion 142 does not directly enter the section with the first slope a1, but the protrusion 142 passes a section with the second slope a2, in which the amount of displacement of the protrusion 142 is smaller than in the section with the slop a1. Therefore, the amount of displacement of the protrusion 142 may be restricted within a proper range at the initial stage of change in rotational position such that the displacement of the protrusion 142 does not abruptly increase, and accordingly, shock produced by collision between the protrusion 142 and the open-cut portion 155 may be relieved and accompanying noise may be reduced.

The insert path boundary 155d and the first boundary 155a both form the boundary of the open-cut portion 155, and need to be distinguished from each other. The insert path boundary 155d and the first boundary 155a may be defined as follows. That is, during vibration of the outer tub 22, when the slide member guide 150 is gradually rotated such that the slide member guide 150 moves from the first rotational position to the second rotational position, the displacement of the protrusion 142 is limited within the first boundary 155a and the second boundary 155b, within a certain range of angle of rotation. However, when the slide member guide 150 continues to rotate, collision between the protrusion 142 and the first boundary 155a begins to stop from a certain moment. The first boundary 155a and the insert path boundary 155d may be divided by this time. If the displacement of the slide member 140 is not restricted when the protrusion 142 positioned on the protrusion insert path 157 is pushed upward by the second boundary 155b, the protrusion 142 may be derailed through the protrusion insert path 157 during subsequent descent of the slide member guide 150. To prevent this event from occurring, the cylinder 130 may be provided with a structure to collide with the upper end of the slide member 140 to restrict movement of the protrusion 142 in the protrusion insert path 157. In this case, one section of the first boundary 155a corresponding to the section in which the displacement of the protrusion 142 is restricted by collision between the cylinder 130 and the slide member 140 may be defined as the insert path boundary 155d. In consideration of collision with the protrusion 142, it is preferable that the slope of a tangential line continuously changes from the insert path boundary 155d to the first boundary 155a. FIG. 5B illustrates formation of a section having a radius of curvature R between the insert path boundary 155d and the first boundary 155a.

Referring to FIG. 4, the shock absorber 100 may include at least one gear to transfer driving force of the shock absorption control motor 173 to allow rotation of the slide member 140. The at least one gear may include a driving gear 162 rotated by the shock absorption control motor 173, and a driven gear 152 formed along the outer circumferential surface of the slide member guide 150 to rotate in response to rotation of the driving gear 162. The gear ratio between the driving gear 162 and the driven gear 152 may be 2:1. This means that the driven gear 152 completes one rotation when the driving gear 162 completes two rotations. In this embodiment, the driving gear 162 rotates at the same rotational speed (rpm) as that of the shock absorption control motor 173, and the driven gear 152 rotates at the same rotational speed (rpm) as that of the slide member guide 150. Depending on embodiments, however, a power transmission means such as a gear may be provided between the driving gear 162 and the driven gear 152.

The cylinder 130 may be provided with a gear exposure opening 138 such that the driven gear 152 formed at the slide member guide 150 is exposed outside of the cylinder 130. In this case, a portion of the driven gear 152 exposed to the outside through the gear exposure opening 138 engages with the driving gear 162.

One end of the cylinder 130 needs to be open wide enough to allow the slide member 140 and the slide member guide 150 to be easily inserted into the cylinder 130. After constituents including the slide member 140 are installed in the cylinder 130, a cylinder cap 113 may be coupled to the one end of the cylinder 130. An insert hole is formed at the center of the cylinder cap 113 to allow insertion of the piston 120. FIGS. 7 and 8 show the cylinder 130, in which a part of the cylinder cap 113 is cut away such that other constituent in the cylinder 130 is clearly visible. The piston 120 may be provided with a fastening portion 132 allowing a fastening member such as a screw, a bolt or a pin to be inserted thereinto to be coupled to the cylinder cap 113. The fastening member may penetrate the fastening portion 132 to be fastened to the cylinder cap 113.

Referring to FIG. 5A, 5B and 6, a pair of protrusions 142 may be symmetrically formed on the slide member guide 150, and two open-cut portions 155 corresponding to the protrusions 142 may be formed on the slide member guide 150. The open-cut portions 155 are symmetrically disposed with respect to the center C (see FIG. 5A) positioned on the axial line of rotation N of the slide member guide 150. Particularly, the inlets of the protrusion insert path 157 may be disposed on the straight line L passing the center C.

The slide member 140 may include a frictional contact surface 143 partially protruding along the outer circumferential surface 141 to maintain contact with the inner circumferential surface of the slide member guide 150. In this case, friction between the slide member 140 and the slide member guide 150 is caused only by the frictional contact surface 143. This structure allows the slide member 140 to be stably supported in the slide member guide 150 without shaking and limits friction occurring between the slide member 140 and the slide member guide 150 to below a certain level. Accordingly, when the slide member guide 150 is at the second rotational position, the slide member 140 can move relatively freely in the slide member guide 150. The frictional contact surface 143 may be formed on both sides of the outer circumferential surface of the slide member 140, and preferably be symmetrically disposed such that the slide member 140 is stably supported.

Particularly, the first boundary 155a and the second boundary 155b are preferably positioned on the frictional contact surface 143 at any rotational position of the slide member guide 150. In this case, the length of the frictional contact surface 143 is greater than the distance between the first boundary 155a and the second boundary 155b, and therefore the frictional contact surface 143 and the slide member guide 150 can be kept in contact with each other.

FIG. 7 is a cutaway view showing the shock absorber, with the slide member guide placed at a first rotational position. FIG. 8 is a cutaway view showing the shock absorber, with the slide member guide placed at a second rotational position. Hereinafter, operation of the shock absorber 100 according to vibration of the outer tub 22 will be described with reference to FIGS. 7 and 8.

In the present invention, the rotational position of the slide member guide 150 can be controlled according to the amount of vibration of the outer tub 22. Regarding control of vibration of an object which exhibits periodic movement, it is widely known that the vibrational energy of the object needs to be absorbed by damping the vibration in a vibration range within which the amount of vibration is large, and a degree of freedom of the object to keep the steady state is preferably secured when the movement of the object reaches the steady state and the amount of vibration is within an allowed range. The first rotational position is a position at which rotation of the slide member guide 150 is controlled to damp the vibration of the outer tub 22 in the case that vibration of the outer tub 22 increases to a large extent. At the first rotational position, the protrusion 142 may be inserted into the restriction groove 155c. In this case, the slide member guide 150 and the slide member 140 are integrally moved, and the vibration is damped by the friction between the slide member 140 and the piston 120.

On the other hand, the second rotational position is a position at which rotation of the slide member guide 150 is controlled such that the slide member guide 150 can be freely moved compared to the movement of the slide member guide 150 at the first rotational position. In the case that vibration of the outer tub 22 is very low as in the steady state, the slide member 140 is fixed and the slide member guide 150 is allowed to move. At the second rotational position, the slide member 140 may be moved by the slide member guide 150 depending on the amount of vibration of the outer tub 22. In this case, due to the distance between the first boundary 155a and the second boundary 155b (for example, the distance between P2 and P2' in FIG. 6), reciprocation of the slide member guide 150 may be performed without interference with the protrusion 142 in the majority of the corresponding section.

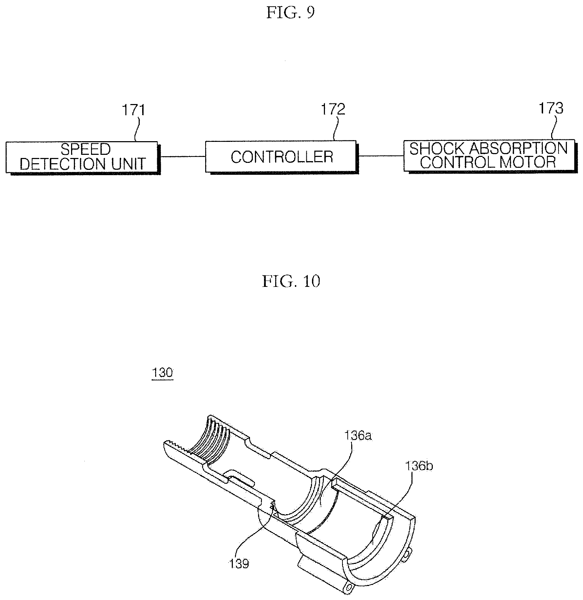

FIG. 9 is a block diagram illustrating a control relationship between constituents that operate a shock absorber according to one embodiment. Referring to FIG. 9, in a vibration section in which the level of vibration of the outer tub 22 becomes equal to or higher than a certain level during rotation of the inner tub 24, the slide member guide 150 is controlled to move to the first rotational position such that the vibration is absorbed by friction acting between the slide member 140 and the piston 120. On the other hand, in the case that the level of vibration of the outer tub 22 is less than a certain level, the slide member guide 150 is controlled to move to the second rotational position to allow the slide member guide 150 to relatively freely move. At this time, the rotational positions of the slide member guide 150 may be switched though control of the shock absorption control motor 173 by a controller 172.

During switching of the slide member guide 150 between the first rotational position and the second rotational position, the slide member guide 150 moves together with the cylinder 130 according to vibration of the outer tub 22. Thereby, the slide member 140 also moves together. At this time, downward movement of the slide member 140 is formed by the first boundary 155a, and upward movement of the slide member 140 is formed by the second boundary 155b.

Depending on embodiments, a vibration sensing unit (not shown) to measure the amount of vibration of the outer tub 22 may be further provided. For example, the vibration sensing unit may be realized as an output sensor to sense change in output power of the driving unit 13 according to rotation of the inner tub 24, or as a displacement sensor to measure displacement of the outer tub 22 according to vibration. In addition, in some embodiments, a speed detection unit 171 to detect change in rotational speed of the inner tub 24 may be further provided. The controller 172 controls operation of the shock absorption control motor 173 according to the rotational speed detected by the speed detection unit 171 to control rotation of the slide member guide 150.

The laundry processing machine generally exhibits a certain pattern of vibration, which is predictable to some extent, according to the rotational speed of the inner tub 24. For example, resonance is produced in the outer tub 22 in a specific range of rotational speed depending on the natural frequency of the outer tub 22. When such a range is defined as a resonant speed section, laundry distribution operation or maldistribution removing operation of rotating the inner tub 24 in a certain pattern is performed in a predetermined range of rotational speed away from the resonant speed section to distribute the laundry accommodated in the inner tub 24 or to remove maldistribution of the laundry in the inner tub 24. When distribution of the laundry in the inner tub 24 becomes uniform to a certain extent through such operation, the rotational speed of the inner tub 24 is increased to perform the drying operation. In this embodiment, the rotational positions of the slide member guide 150 are controlled, with reference to a preset speed (about 400 rpm) equal to or higher than the resonant speed. That is, in the range of rotational speed of the inner tub 24, which is lower than the preset speed, the slide member guide 150 is controlled to move to the first rotational position to damp the vibration. In the range of rotational speed of the inner tub 24 higher than the preset speed, the slide member guide 150 is controlled to move to the second rotational position to secure a movement section wide enough for the slide member guide 150 to move without interfering with the protrusion 142 (that is, the maximum distance that the protrusion 142 can move in the open-cut portion, at the second rotational position).

Particularly, the slide member guide 150 may selectively switch to the first rotational position or the second rotational position according to the rotational speed of the inner tub 24. In some embodiments, the slide member guide 150 may be controlled such that the slide member guide 150 has various rotational positions between the first rotational position and the second rotational position.

In addition, in controlling of the slide member guide 150 to move to the second rotational position in the section of steady state rotation of the inner tub 22, if the displacement of the slide member guide 150 according to the amount of vibration of the outer tub 22 is less than the distance between the first boundary 155a and the second boundary 155b, for example, the distance between P2 and P2' in FIG. 5B at the same rotational position, collision between the open-cut portion 155 and the protrusion 142 does not occur. Thereby, the slide member guide 150 can freely move without interfering with the protrusion 142 within a predetermined rotational displacement.

FIG. 10 is a cutaway view showing the cylinder 130. Referring to FIG. 10, the slide member guide 150 may be supported by contacting the inner circumferential surface of the cylinder 130. The cylinder 130 may include at least one support surface partially protruding from the inner circumferential surface of the cylinder 130. The support surface may include a first support surface 136a and a second support surface 136b, which respectively contact both longitudinal ends of the slide member guide 150. The outer circumferential surface of the slide member guide 150 does not entirely contact the inner circumferential surface of the cylinder 130, but partially contacts the inner circumferential surface of the cylinder 130 on the at least one support surface. Accordingly, friction may be reduced and switching between the rotational positions of the slide member guide 150 may be smoothly performed.

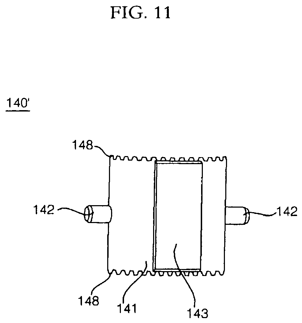

Meanwhile, a restriction surface 139 (see FIGS. 3 and 11) may be formed in the cylinder 130. While the protrusion of the slide member 140 moves in the protrusion insert path 157 of the slide member guide 150, it hits the upper end of the slide member 140. Thereby, the maximum allowable displacement of the slide member 140 is limited. Particularly, the restriction surface 139 contacts the longitudinal end of the slide member 140 before the protrusion 142 contacts the longitudinal end of the movement groove 135. Thereby, movement of the protrusion 142 may be restricted. Since the protrusion 142 does not collide with the longitudinal end of the movement groove 135, damage can be prevented.

FIG. 11 is a view showing another embodiment of the slide member. Referring to FIG. 11, depressions 148 may be formed at a portion of the upper end of the slide member 140' which collide with the restriction surface 139 formed on the cylinder 130. Compared to the case in which the upper end of the slide member 140' has an even surface, the surface with the depressions may reduce the area of the surface to collide with the restriction surface 139. Thereby, noise due to shock can be reduced.

In the embodiment, a vibration sensing unit (not shown) to measure the amount of vibration of the outer tub 22 may be further provided. For example, the vibration sensing unit may be realized as an output sensor to sense change in output power of the driving unit 13 according to rotation of the inner tub 24, or as a displacement sensor to measure displacement of the outer tub 22 according to vibration. In addition, in some embodiments, a speed detection unit 171 to detect change in rotational speed of the inner tub 24 may be further provided.

The laundry processing machine generally exhibits a certain pattern of vibration, which is predictable to some extent, according to the rotational speed of the inner tub 24. For example, resonance is produced in the outer tub 22 in a specific range of rotational speed depending on the natural frequency of the outer tub 22. When such a range is defined as a resonant speed section, laundry distribution operation or maldistribution removing operation of rotating the inner tub 24 in a certain pattern is performed in a predetermined range of rotational speed away from the resonant speed section to distribute the laundry accommodated in the inner tub 24 or to remove maldistribution of the laundry in the inner tub 24. When distribution of the laundry in the inner tub 24 becomes uniform to a certain extent through such operation, the rotational speed of the inner tub 24 is increased to perform the drying operation.

The laundry processing machine of the present invention is capable of performing proper shock absorption or vibration attenuation according to the characteristics of vibration of the outer tub. Therefore, the system can be stabilized in a shorter time.

In addition, the laundry processing machine of the present invention is capable of actively varying the capacity of shock absorption according to the characteristics of vibration of the outer tub. Therefore, the time taken prior to start of the drying operation can be reduced.

In addition, the laundry processing machine of the present invention can provide a larger capacity of shock absorption in the vibration section in which the outer tub greatly vibrates, thereby actively damping the vibration of the outer tub. Thereby, even if the space between the casing and the outer tub is narrow, collision between the outer tub and the casing can be prevented. Therefore, a larger volume of the outer tub can be secured for the inner space of the casing, which is limited to have a certain size.

In addition, the laundry processing machine of the present invention can reduce the amount of vibration transferred to the casing in the steady state, thereby reducing noised produced by the vibration.

## Claims

1. A laundry processing machine comprising:
a casing (11);
an outer tub (22) supported in the casing (11);
an inner tub (24) rotatably provided in the outer tub (22); and
a shock absorber (100) connected, at one end thereof, to the casing (11) and connected, at the other end thereof, to the outer tub (22) to absorb vibration of the outer tub (22) caused by rotation of the inner tub (24),
wherein the shock absorber (100) comprises:
a cylinder (130) connected to one of the casing (11) and the outer tub (22); and
a piston (120) connected to the other one of the casing (11) and the outer tub (22), wherein the cylinder (130) and the piston (120) are configured to make relative movement with respect to each other according to movement of the outer tub (22),**characterized by** a slide member (140) arranged to slide along the piston (120) with a frictional contact with the piston (120); and
a slide member guide (150) interposed between the cylinder (130) and the slide member (140) and being rotatable between a first rotational position and a second rotational position with respect to the slide member (140),
wherein the slide member guide (150) is configured to move to the first rotational position when a level of vibration of the outer tub (22) is equal to or higher than a certain level, and to the second rotational position when a level of vibration of the outer tub (22) is lower than the certain level,
wherein the slide member guide (150) is configured to have a larger maximum allowable relative displacement with respect to the slide member (140) at the second rotational position than at the first rotational position, and
wherein friction between the slide member guide (150) and the slide member (140) is smaller than friction between the slide member (140) and the piston (120).

2. The laundry processing machine according to claim 1, wherein the slide member guide (150) is adapted to move together with the cylinder (130) according to the vibration of the outer tub (22).

3. The laundry processing machine according to claim 1 or 2, wherein, the maximum allowable relative displacement of the slide member guide (150) with respect to the slide member (140) increases when the slide member guide (150) rotates from the first rotational position to the second rotational position.

4. The laundry processing machine according to claim 1, 2, or 3, wherein:
the slide member (140) comprises a protrusion (142) protruding from an outer circumferential surface (141) of the slide member (140) ;
the slide member guide (150) comprises an open-cut portion (155) extending along a circumferential direction of the slide member guide (150) to allow the protrusion (142) to be disposed through the open-cut portion (155); and
the open-cut portion (155) comprises first and second boundaries (155a, 155b) formed at both sides of the protrusion (142) such that the first boundary (155a) moves the protrusion (142) in one direction and the second boundary (155b) moves the protrusion in an opposite direction according the vibration of the outer tub (22),
wherein a distance between the first boundary (155a) and the second boundary (155b) varies along a circumferential direction.

5. The laundry processing machine according to claim 4, wherein a relative displacement of the slide member guide (150) with respect to the protrusion (142) is restricted by the distance between the first boundary (155a) and the second boundary (155b).

6. The laundry processing machine according to claim 4 or 5, wherein the protrusion is restricted between the first boundary (155a) and the second boundary (155b) when the slide member guide (150) is at the first rotational position.

7. The laundry processing machine according to any one of claims 1 to 6, wherein the shock absorber (100) further comprises a shock absorption control motor (173) to provide driving force,
wherein the slide member guide (150) is rotated by the shock absorption control motor (173).

## Patentansprüche

1. Wäschebehandlungsmaschine mit:
einem Gehäuse (11);
einem im Gehäuse (11) gestützten äußeren Bottich (22)
einem drehbar im äußeren Bottich (22) vorgesehenen inneren Bottich (24); und
einem Stoßdämpfer (100), der an seinem einen Ende mit dem Gehäuse (11) und an seinem anderen Ende mit dem äußeren Bottich (22) verbunden ist, um die vom inneren Bottich (24) verursachte Vibration des äußeren Bottichs (22) zu dämpfen,
wobei der Stoßdämpfer (100) aufweist:
einen Zylinder (130), der mit dem Gehäuse (11) oder dem äußeren Bottich (22) verbunden ist; und
einen Kolben (120), der mit dem anderen des Gehäuses (11) oder des äußeren Bottich (22) verbunden ist, wobei der Zylinder (130) und der Kolben (120) ausgebildet sind, sich gemäß der Bewegung des äußeren Bottichs (22) relativ zueinander zu bewegen, **gekennzeichnet durch** ein Gleitelement (140), das vorgesehen ist, in Reibungskontakt mit dem Kolben (120) am Kolben (120) entlang zu gleiten; und
einem Gleitelement-Führungsteil (150), das zwischen dem Zylinder (130) und dem Gleitelement (140) angeordnet ist und bezüglich des Gleitelements (140) zwischen einer ersten Drehposition und einer zweiten Drehposition drehbar ist,
wobei das Gleitelement-Führungsteil (150) ausgebildet ist, sich in die erste Drehposition zu bewegen, wenn ein Vibrationsgrad des äußeren Bottichs (22) gleich oder höher ist als ein bestimmter Grad, und in die zweite Drehposition, wenn ein Vibrationsgrad des äußeren Bottichs (22) niedriger ist als ein bestimmter Grad,
wobei das Gleitelement-Führungsteil (150) ausgebildet ist, in der zweiten Drehposition eine höhere maximal zulässige relative Verschiebung bezüglich des Gleitelements (140) zu haben, als in der ersten Drehposition, und
wobei die Reibung zwischen dem Gleitelement-Führungsteil (150) und dem Gleitelement (140) geringer ist, als Reibung zwischen dem Gleitelement (140) und dem Kolben (120).

2. Wäschebehandlungsmaschine nach Anspruch 1, wobei das Gleitelement-Führungsteil (150) geeignet ist, sich zusammen mit dem Zylinder (130) gemäß der Vibration des äußeren Bottichs (22) zu bewegen.

3. Wäschebehandlungsmaschine nach Anspruch 1 oder 2, wobei die maximal zulässige relative Verschiebung des Gleitelement-Führungsteils (150) bezüglich des Gleitelements (140) ansteigt, wenn sich das Gleitelement-Führungsteil (150) von der ersten Drehposition in die zweite Drehposition dreht.

4. Wäschebehandlungsmaschine nach Anspruch 1, 2 oder 3, wobei:
das Gleitelement (140) einen von einer Außenumfangsoberfläche (141) des Gleitelements (140) vorstehenden Vorsprung (142) aufweist;
das Gleitelement-Führungsteil (150) einen sich entlang der Umfangsrichtung des Gleitelement-Führungsteils (150) erstreckenden offenen Abschnitt (155) aufweist, um die Anordnung des Vorsprungs (142) durch den offenen Abschnitt (155) zu erlauben; und
der offene Abschnitt (155) an beiden Seiten des Vorsprungs (142) ausgebildete erste und zweite Begrenzungen (155a, 155b) aufweist, so dass die erste Begrenzung (155a) den Vorsprung (142) in die eine und die zweite Begrenzung (155b) den Vorsprung in die entgegengesetzte Richtung gemäß der Vibration des äußeren Bottichs (22) bewegt,
wobei ein Abstand zwischen der ersten Begrenzung (155a) und der zweiten Begrenzung (155b) entlang einer Umfangsrichtung variiert.

5. Wäschebehandlungsmaschine nach Anspruch 4, wobei eine relative Verschiebung des Gleitelement-Führungsteils (150) bezüglich des Vorsprungs (142) von dem Abstand zwischen der ersten Begrenzung (155a) und der zweiten Begrenzung (155b) begrenzt wird.

6. Wäschebehandlungsmaschine nach Anspruch 4 oder 5, wobei der Vorsprung zwischen der ersten Begrenzung (155a) und der zweiten Begrenzung (155b) begrenzt ist, wenn das Gleitelement-Führungsteil (150) in der ersten Drehposition ist.

7. Wäschebehandlungsmaschine nach einem der Ansprüche 1 bis 6, wobei der Stoßdämpfer (100) ferner einen Stoßdämpfungssteuermotor (173) aufweist, um Antriebskraft bereitzustellen,
wobei das Gleitelement-Führungsteil (150) vom Stoßdämpfungssteuermotor (173) gedreht wird.

## Revendications

1. Machine de traitement du linge comprenant :
un carter (11) ;
une cuve extérieure (22) supportée dans le carter (11) ;
une cuve intérieure (24) prévue de manière rotative dans la cuve extérieure (22) ; et
un absorbeur de choc (100) raccordé, à une extrémité de celui-ci, au carter (11) et raccordé, à l'autre extrémité de celui-ci, à la cuve extérieure (22) pour absorber la vibration de la cuve extérieure (22) causée par la rotation de la cuve intérieure (24),
dans laquelle l'absorbeur de choc (100) comprend :
un cylindre (130) raccordé à un parmi le carter (11) et la cuve extérieure (22) ; et
un piston (120) raccordé à l'autre parmi le carter (11) et la cuve extérieure (22), dans laquelle le cylindre (130) et le piston (120) sont configurés pour réaliser un mouvement relatif l'un par rapport à l'autre selon le mouvement de la cuve extérieure (22), **caractérisée par** un élément coulissant (140) agencé pour coulisser le long du piston (120) avec un contact de friction avec le piston (120) ; et
un guidage d'élément coulissant (150) interposé entre le cylindre (130) et l'élément coulissant (140) et étant rotatif entre une première position de rotation et une seconde position de rotation par rapport à l'élément coulissant (140),
dans laquelle le guidage d'élément coulissant (150) est configuré pour se déplacer à la première position de rotation lorsqu'un niveau de vibration de la cuve extérieure (22) est égal ou supérieur à un certain niveau, et à la seconde position de rotation lorsqu'un niveau de vibration de la cuve extérieure (22) est inférieur au certain niveau,
dans laquelle le guidage d'élément coulissant (150) est configuré pour présenter un déplacement relatif maximal admissible plus grand par rapport à l'élément coulissant (140) à la seconde position de rotation qu'à la première position de rotation, et
dans laquelle la friction entre le guidage d'élément coulissant (150) et l'élément coulissant (140) est plus petite que la friction entre l'élément coulissant (140) et le piston (120).

2. Machine de traitement du linge selon la revendication 1, dans laquelle le guidage d'élément coulissant (150) est adapté pour se déplacer conjointement avec le cylindre (130) selon la vibration de la cuve extérieure (22).

3. Machine de traitement du linge selon la revendication 1 ou 2, dans laquelle le déplacement relatif maximal admissible du guidage d'élément coulissant (150) par rapport à l'élément coulissant (140) augmente lorsque le guidage d'élément coulissant (150) tourne de la première position de rotation à la seconde position de rotation.

4. Machine de traitement du linge selon la revendication 1, 2 ou 3, dans laquelle :
l'élément coulissant (140) comprend une saillie (142) faisant saillie depuis une surface circonférentielle extérieure (141) de l'élément coulissant (140) ;
le guidage d'élément coulissant (150) comprend une portion ouverte (155) s'étendant le long d'une direction circonférentielle du guidage d'élément coulissant (150) pour permettre à la saillie (142) d'être disposée au travers de la portion ouverte (155) ; et
la portion ouverte (155) comprend des première et seconde limites (155a, 155b) formées sur les deux côtés de la saillie (142) de sorte que la première limite (155a) déplace la saillie (142) dans une direction et la seconde limite (155b) déplace la saillie dans une direction opposée selon la vibration de la cuve extérieure (22),
dans laquelle une distance entre la première limite (155a) et la seconde limite (155b) varie le long d'une direction circonférentielle.

5. Machine de traitement du linge selon la revendication 4, dans laquelle un déplacement relatif du guidage d'élément coulissant (150) par rapport à la saillie (142) est restreint par la distance entre la première limite (155a) et la seconde limite (155b).

6. Machine de traitement du linge selon la revendication 4 ou 5, dans laquelle la saillie est restreinte entre la première limite (155a) et la seconde limite (155b) lorsque le guidage d'élément coulissant (150) est à la première position de rotation.

7. Machine de traitement du linge selon l'une quelconque des revendications 1 à 6, dans laquelle l'absorbeur de choc (100) comprend en outre un moteur de commande d'absorption de choc (173) pour fournir une force d'entraînement,
dans laquelle le guidage d'élément coulissant (150) est tourné par le moteur de commande d'absorption de choc (173).
